(19) Europäisches Patentamt
European Patent Office
Office européen des brevets

(11) **EP 3 553 865 A1**

(12) **EUROPEAN PATENT APPLICATION**
published in accordance with Art. 153(4) EPC

(43) Date of publication:
**16.10.2019 Bulletin 2019/42**

(51) Int Cl.:
**H01M 8/18** (2006.01)   **H01M 8/0258** (2016.01)

(21) Application number: **17878754.5**

(86) International application number:
**PCT/JP2017/043745**

(22) Date of filing: **06.12.2017**

(87) International publication number:
**WO 2018/105634 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.12.2016   JP 2016236718**

(71) Applicant: **Showa Denko K.K.**
**Tokyo 105-8518 (JP)**

(72) Inventors:
• **ICHIKAWA Masatoshi**
**Tokyo 105-8518 (JP)**
• **ISEKI Keizo**
**Tokyo 105-8518 (JP)**
• **HANAWA Kenzo**
**Tokyo 105-8518 (JP)**

(74) Representative: **Strehl Schübel-Hopf & Partner**
**Maximilianstrasse 54**
**80538 München (DE)**

(54) **COLLECTOR PLATE AND REDOX FLOW BATTERY**

(57)   This collector plate includes a plurality of grooves through which an electrolyte is capable of flowing, and which are provided in at least one surface of the collector plate, in which a surface roughness (Ra) of an internal surface of each groove is smaller than a surface roughness (Ra) of a first surface connecting together the grooves.

FIG. 4

## Description

TECHNICAL FIELD

The present invention relates to a collector plate and a redox flow battery.

The present application claims priority on Japanese Patent Application No. 2016-236718 filed on December 6, 2016, the content of which is incorporated herein by reference.

BACKGROUND ART

A redox flow battery is known as a high-capacity storage battery. Typically, the redox flow battery includes an ion-exchange membrane that separates an electrolyte, and electrodes that are provided on both sides of the ion-exchange membrane. An oxidation reaction and a reduction reaction simultaneously progress on the electrodes, and thus, the redox flow battery is charged and discharged.

In the redox flow battery, the electrode is stored in an electrode compartment. The redox flow battery operates while the electrolyte is supplied to the electrode compartment and the electrolyte is circulated. Ions in the electrolyte give electrons to the electrodes, and the electrons are transferred to the outside of the redox flow battery. At this time, protons are transferred to the other electrode compartment via the ion-exchange membrane. The redox flow battery is charged and discharged by the flowing of the electrons and the protons.

The redox flow battery is manufactured by sequentially stacking collector plates, the electrodes, and the ion-exchange membrane on top of each other which are separate members, and interposing the collector plates, the electrodes, and the ion-exchange membrane between themselves in a stacking direction (for example, Patent Documents 1 and 2).

When the separate members are assembled in the manufacturing of the redox flow battery, a positional alignment between the separate members is required. In the case where the position of the electrode shifts relative to the position of the collector plate, the electrolyte flows out without passing through the electrode, and the charge and discharge capacity of the redox flow battery decreases.

In the case where an electrode side surface of the collector plate has a certain level of surface roughness, a positional shift can be prevented. The electrolyte flows on the surface of the collector plate. In the case where the surface of the collector plate is rough, a turbulent flow of the electrolyte may occur, and the electrolyte may stagnate.

Ideally and primarily, reactions in the battery occur between the electrolyte and the electrode. However, reactions between the electrolyte and the collector plate may occur in a region where the electrolyte stagnates. The collector plate is assumed to be used for the transferring of electrons, and is not assumed to serve as an electrode. For this reason, a reaction efficiency of the collector plate in the battery is inferior to that of the electrode, and the redox flow battery cannot exhibit a sufficient performance.

PRIOR ART DOCUMENTS

Patent Documents

Patent Document 1: Japanese Unexamined Patent Application, First Publication No. 2015-122231
Patent Document 2: Published Japanese Translation No. 2015-505147 of the PCT International Publication

DISCLOSURE OF THE INVENTION

Problems to be Solved by the Invention

The present invention has been made in light of the problem, and an object of the present invention is to obtain a collector plate that prevents a positional shift of an electrode during the assembly of a redox flow battery, and prevents an electrolyte from stagnating in an electrode compartment.

Solutions for Solving the Problems

The inventors of the present invention have found that in the case where there is a difference in surface roughness between a first surface of an internal wall on the side of an electrode provided in an electrode compartment and an internal surface through which an electrolyte flows, a positional shift of the electrode during the assembly of a redox flow battery can be prevented, and in addition, the electrolyte can be prevented from stagnating in the electrode compartment.

That is, the present invention is to provide a collector plate and a redox flow battery hereinbelow to solve the problem.

(1) According to one aspect of the present invention, there is provided a collector plate including a plurality of grooves through which an electrolyte is capable of flowing, and which are provided in at least one surface of the collector plate, in which a surface roughness (Ra) of an internal surface of each groove is smaller than a surface roughness (Ra) of a first surface connecting together the grooves.

(2) In the collector plate of the aspect, a surface roughness (Ra) of a 50% or larger area of region of the internal surface of each groove may be smaller than the surface roughness (Ra) of the first surface connecting together the grooves.

(3) In the collector plate of the aspect, each of the plurality of grooves may have a rectangular cross-sectional shape, and a surface roughness (Ra) of a side surface of each groove may be smaller than the surface roughness (Ra) of the first surface.

(4) In the collector plate of the aspect, each of the plurality of grooves may have a rectangular cross-sectional shape, and a surface roughness (Ra) of a bottom surface of each groove may be smaller than the surface roughness (Ra) of the first surface.

(5) In the collector plate of the aspect, the surface roughness (Ra) of the first surface may be greater than or equal to 1 $\mu$m and less than or equal to 300 $\mu$m.

(6) In the collector plate of the aspect, the surface roughness (Ra) of the internal surface of each groove may be greater than or equal to 0.03 $\mu$m and less than 1 $\mu$m.

(7) In the collector plate of the aspect, the internal surface of each groove may be coated with an insulation material.

(8) According to another aspect of the present invention, there is provided a redox flow battery including an ion-exchange membrane; the collector plate of the aspect; and electrodes disposed between the ion-exchange membrane and the current collector, in which the collector plate is disposed in such a manner that the first surface faces the electrode.

(9) In the redox flow battery of the other aspect, the collector plate may have a peripheral edge wall surrounding a predetermined region, and the peripheral edge wall may form a part of an electrode compartment through which an electrolyte flows.

Effects of the Invention

In the redox flow battery of the other aspect of the present invention, a positional shift of the electrode during the assembly of the redox flow battery is prevented. It is considered that the electrolyte can be prevented from stagnating in the electrode compartment, and the cell resistance can be decreased.

BRIEF DESCRIPTION OF THE DRAWINGS

FIG. 1 is a schematic cross-sectional view of a redox flow battery of a first embodiment.
FIG. 2 is a plan view of a collector plate stored in a cell frame of the redox flow battery of the first embodiment as seen in a stacking direction.
FIG. 3 is a schematic cross-sectional view of the collector plate as the redox flow battery of the first embodiment is cut along an A-A plane in FIG. 2.
FIG. 4 is a schematic perspective magnified view of main elements of the collector plate of the redox flow battery of the first embodiment.
FIG. 5 is a schematic cross-sectional view as the redox flow battery of the first embodiment is cut along the A-A plane in FIG. 2.
FIG. 6 is a view showing a flow of an electrolyte in the redox flow battery of the first embodiment.

EMBODIMENTS FOR CARRYING OUT THE INVENTION

A redox flow battery will be described hereinbelow in detail with proper reference to the drawings. In the drawings referenced in the description hereinbelow, characteristic parts may be magnified for an illustrative purpose for easy understanding of characteristics of the present invention, and a dimension ratio of each configuration element may differ from an actual value. Materials and dimensions provided in the description hereinbelow are simply exemplary examples, and the present invention is not limited thereto. Modifications can be appropriately made without departing from requirements (features) of the present invention.

(First Embodiment)

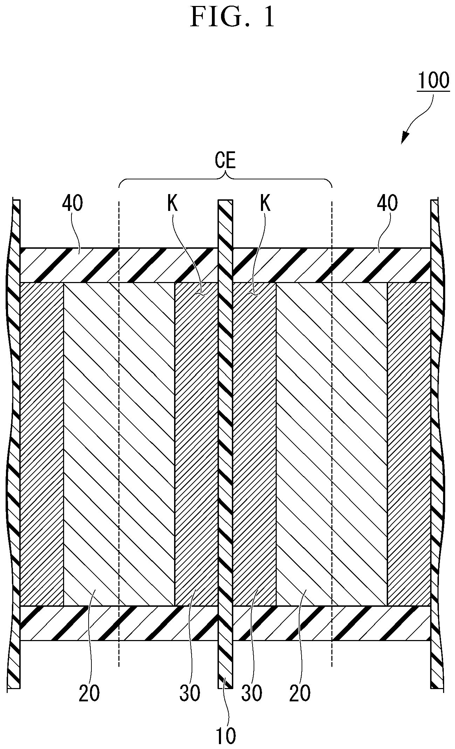

FIG. 1 is a schematic cross-sectional view of a redox flow battery of a first embodiment.

A redox flow battery 100 shown in FIG. 1 includes: an ion-exchange membrane 10; collector plates 20; and electrodes 30. The collector plates 20 and the electrodes 30 are surrounded by a cell frame 40. The electrode 30 is provided in an electrode compartment K formed by the ion-exchange membrane 10, the collector plate 20, and the cell frame 40. An electrolyte supplied to the electrode compartment K is prevented from leaking to the outside by the cell frame 40.

The redox flow battery 100 shown in FIG. 1 has a cell-stack structure where a plurality of cells CE are stacked on top of each other. The number of stacks of the cells CE can be appropriately changed depending on applications, and only a single cell may be provided. In the case where the plurality of cells CE are connected together in series, a practical voltage is obtained. One cell CE includes the ion-exchange membrane 10; two electrodes 30 servings as a positive electrode and a negative electrode between which the ion-exchange membrane 10 is interposed; and the collector plates 20 between which the two electrodes 30 are interposed.

Hereinbelow, a stacking direction of the cell-stack structure where the cells CE are stacked on top of each other may be simply referred to as a "stacking direction", and the direction of a plane vertical to the stacking direction of the cell-stack structure may be simply referred to as an "in-plane direction".

"Ion-exchange Membrane"

A cation-exchange membrane can be preferably used as the ion-exchange membrane 10. Specifically, examples of the material of the ion-exchange membrane 10 include a perfluorocarbon polymer having a sulfo group, a hydrocarbon-based polymer compound having a sulfo group, a polymer compound doped with an inorganic acid such as phosphoric acid, an organic/inorganic hybrid polymer in which a part thereof is substituted with a proton-conductive functional group, and a proton conductor in which a polymer matrix is impregnated with a phosphoric acid solution or a sulfuric acid solution. Among the materials, a perfluorocarbon polymer having a sulfo group is preferably used, and a Nafion (registered trademark) is more preferably used.

"Collector Plate"

The collector plate 20 is a current collector having the function of transferring electrons to or from the electrode 30. In the case where both surfaces of the collector plate 20 can be used as a current collector, the collector plate 20 may be referred to as a bipolar plate. The collector plate of the embodiment is more preferably used in a redox flow battery.

The collector plate 20 can be made from a material having conductivity. A conductive material containing carbons can be used. Specifically, examples of the material include conductive resin consisting of graphite and an organic polymer compound, conductive resin in which a part of graphite is substituted with at least one of a carbon black and a diamond-like carbon, a mold material obtained by kneading carbon and resin. Among the materials, a mold material obtained by kneading carbon and resin and molding the kneaded product is preferably used.

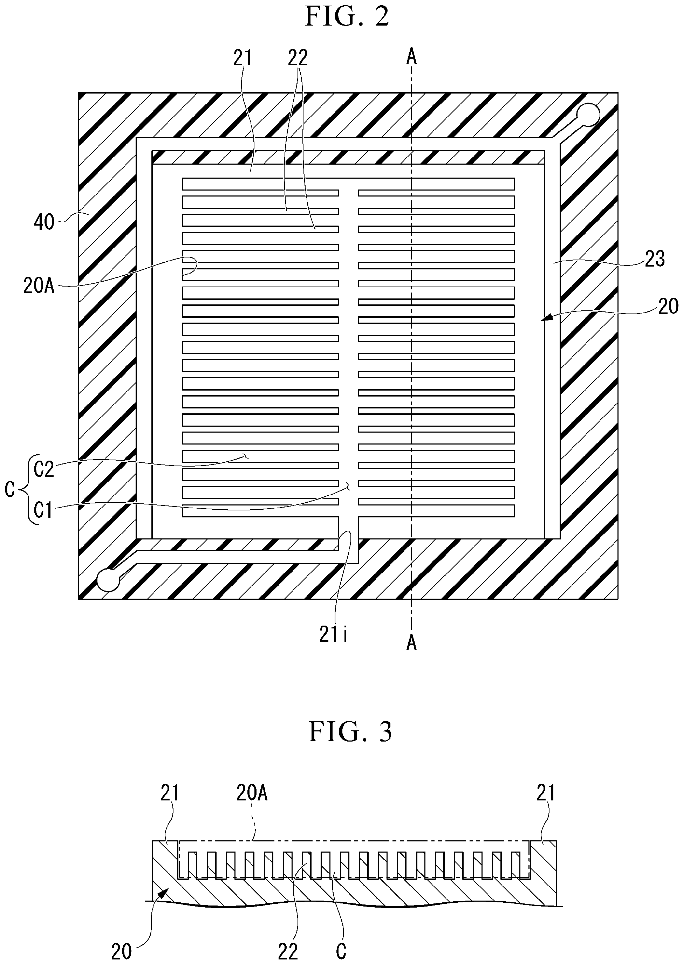

FIG. 2 is a plan view of the collector plate 20 stored in the cell frame 40 as seen in the stacking direction.

A plurality of groove portions C are provided on a surface of the collector plate 20 positioned on the side of the ion-exchange membrane 10 (the ion-exchange membrane 10 side surface). A wall portion (internal wall 22) is provided at a position between grooves of the plurality of groove portions C. It is also referred that a plurality of the internal walls 22 are provided, and the groove portion C is formed between the internal walls 22. A recessed region (portion) 20A is formed on the surface of the collector plate 20 positioned on the side of the ion-exchange membrane 10. FIG. 3 is a schematic cross-sectional view of the collector plate as the redox flow battery of the first embodiment is cut along an A-A plane. As shown in FIG. 3, the recessed region 20A includes the groove portions C and a region into which a first electrode 31 (will be described later) is fitted. A peripheral edge wall 21 may be provided on one surface of the collector plate 20, and the peripheral edge wall 21 defines the recessed region 20A. An electrolyte is supplied from an opening portion 21i of the peripheral edge wall 21 into the recessed region 20A surrounded by the peripheral edge wall 21.

It is preferable that the electrolyte supplied from the opening portion 21i of the peripheral edge wall 21 diffuses throughout the recessed region 20A, and then is exhausted from an exhaust path 23. Because the electrolyte diffuses throughout the recessed region 20A in the in-plane direction, the entire surface of the electrode 30 in the in-plane direction can be used. As a result, the cell resistance of the redox flow battery decreases, and charge and discharge characteristics are improved.

The internal walls 22 form the groove portions C through which the electrolyte flows in the recessed region 20A. Because the internal walls 22 are provided, the electrolyte is easily supplied throughout the recessed region 20A. The shape of the groove portion C and the shape of the internal wall 22 regulated by the plurality of groove portions C are not limited to a specific shape.

The internal walls 22 shown in FIG. 2 include a first groove portion C1 that is a part of the groove portion C extending from the opening portion 21i in one direction, and second groove portions C2 that are connected with the first groove portion C1 and branch from the first groove portion C1 in a direction intersecting the first groove portion C1. The supplied electrolyte flows along the first groove portion C1, and diffuses in the second groove portions C2. That is, the electrolyte easily diffuses in the recessed region 20A in the in-plane direction.

The configuration of the collector plate 20 is not limited to the configuration shown in FIG. 2, and the collector plate 20 can have various configurations.

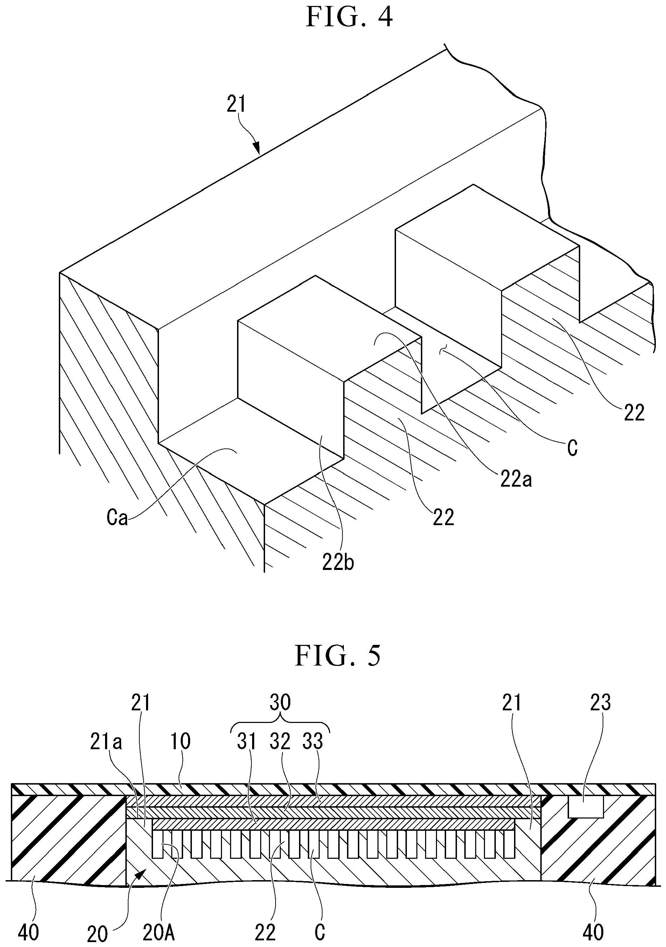

FIG. 4 is a perspective magnified view of main elements of the collector plate 20. As shown in FIG. 4, a first surface 22a of an internal wall 22 (exposed surface which is positioned on the side (upper side in FIG. 4) of one surface, and in which the grooves are formed) is a surface disposed on the side of the ion-exchange membrane 10. The first surface 22a of the internal wall 22 is also referred to as a surface that is positioned toward the stacking direction, and faces the electrode 30. The first surface is a surface, and is not to be a line or point which connects together the grooves, for example, the cross-sectional shape of the internal wall 22 is not to be a triangular shape. The cross-sectional shape of the groove portion C between the internal walls 22 is not limited to a rectangular shape shown in FIG. 4, and may be a semicircular or triangular shape.

An internal surface of the groove portion C includes a portion having a surface roughness (Ra) smaller than the surface roughness (Ra) of the first surface 22a of the internal wall 22 positioned on the side of the electrode 30. It is also referred that a portion having a surface roughness (Ra) smaller than the surface roughness (Ra) of the first surface 22a is provided in the internal surface of the groove portion C. With regard to the surface roughness (Ra) of the internal surface of the groove portion, the surface roughness (Ra) of the entire internal surface of the groove portion C is not required to satisfy the above-described relationship. It is preferable that the surface roughness (Ra) of a 50% or larger area of region of the internal surface of the groove portion C satisfies the relationship (it is preferable that with regard to a 50% or larger area of region of the internal surface of the groove portion C, the surface roughness (Ra) satisfies the relationship), it is more preferable that the surface roughness (Ra) of an 80% or larger area of region of the internal surface of the groove portion C satisfies the relationship (it is more preferable that with regard to an 80% or larger area of region of the internal surface of the groove portion C, the surface roughness (Ra) satisfies the relationship), and it is further more preferable that the surface roughness (Ra) of the entire internal surface of the groove portion C satisfies the relationship.

The "50% or larger area" refers to the area of a region of the internal surface in a case where a surface roughness (Ra) is measured at each of ten arbitrary points on each of the internal surface of the groove portion C and the first surface 22a of the internal wall 22, and the surface roughnesses measured at five or more points on the first surface 22a of the internal wall 22 are greater than an average value of the surface roughnesses measured at ten points on the internal surface of the groove portion C. In the case where it is difficult to perform a measurement by a contact type surface roughness meter, a measurement is performed by a non-contact type surface roughness meter. The similar definition can be applied to the "80% or larger area" and the "entire surface".

In FIG. 4, the internal surface of the groove portion C corresponds to a side surface 22b of the internal wall 22 and a bottom surface Ca of the groove portion C. The surface roughness is an arithmetic surface roughness measured based on JIS B0601. A measurement length is set to 2 mm. The arithmetic surface roughness is also referred to as a mean surface roughness or simply a surface roughness.

As described above, when the electrolyte diffuses in the recessed region 20A in the in-plane direction, a surface state of the internal surface (the side surface 22b and the bottom surface Ca) of the groove portion C more affects a flow of the electrolyte than that of the first surface 22a of the internal wall 22. For this reason, in the case where the surface roughness (Ra) of the internal surface (the side surface 22b and the bottom surface Ca) of the groove portion C is set to be smaller than the surface roughness (Ra) of the first surface 22a, a turbulent flow of the electrolyte can be prevented.

In the case where the groove portion C has a rectangular cross-sectional shape, it is preferable that the surface roughness (Ra) of a side surface (the side surface 22b of the internal wall 22) of the groove portion C and/or the surface roughness (Ra) of the bottom surface Ca of the groove portion C are smaller than the surface roughness (Ra) of the first surface 22a.

Turbulence in a flow of the electrolyte causes stagnation of the electrolyte. Reactions between the electrolyte and the collector plate may occur in a region where the electrolyte stagnates. The collector plate is assumed to be used for the transferring of electrons, and is not assumed to serve as an electrode. For this reason, the reaction efficiency of the collector plate in the battery is inferior to that of the electrode, and the redox flow battery cannot exhibit a sufficient performance.

Positioning during the assembly of the redox flow battery 100 is affected by the first surface 22a of the internal wall 22. The reason is that the first surface 22a is in direct contact with the electrode 30. That is, in the case where the surface roughness (Ra) of the first surface 22a is set to be greater than the surface roughness (Ra) of the internal surface of the groove portion C, a positional shift of the electrode 30 relative to the collector plate 20 can be prevented, and a high accuracy of positioning can be obtained.

In the case where the position of the electrode 30 shifts relative to the position of the collector plate 20 when the separate members are assembled during the assembly of the redox flow battery, the electrolyte flows out without passing through the electrode 30, and charge and discharge capacity of the redox flow battery decreases.

The surface roughness (Ra) of the first surface of the internal wall positioned on the side of the electrode is preferably greater than or equal to 1 $\mu$m and less than or equal to 300 $\mu$m, more preferably greater than or equal to 2 $\mu$m and less than or equal to 250 $\mu$m, and further more preferably greater than or equal to 5 $\mu$m and less than or equal to 200 $\mu$m.

In the case where the first surface 22a of the internal wall 22 is in the above-described range, a positional shift of the electrode 30 relative to the collector plate 20 can be sufficiently prevented. A large contact area between the electrode 30 and the internal wall 22 can be obtained, and the transferring of electrons occurring in the electrolyte becomes smooth. As a result, the cell resistance of the redox flow battery decreases.

The surface roughness (Ra) of the first surface 22a of the internal wall 22 is preferably greater than or equal to 1.0 time and less than or equal to 100 times the fiber diameter of carbon fibers (will be described later) of the electrode 30, and more preferably greater than or equal to 1.2 times and less than or equal to 50 times the fiber diameter. In the case where the first surface 22a of the internal wall 22 is in the above-described range, the contact area between the electrode 30 and the collector plate 20 can be further increased.

In the case where the fiber diameter of the carbon fibers of the electrode 30 is greatly large relative to the surface roughness (Ra) of the first surface 22a of the internal wall 22, the carbon fibers cannot enter the protrusions and recessions of the first surface 22a. In this case, the carbon fibers are in point contact with the protrusions and recessions of the first surface 22a. On the other hand, in the case where the surface roughness (Ra) of the first surface 22a of the internal wall 22 is set to be in the above-described range, the carbon fibers can enter the protrusions and recessions, and the carbon fibers are in surface contact with the first surface 22a. As a result, the contact area between the electrode 30 and the collector plate 20 increases.

The surface roughness (Ra) of the internal surface of the groove portion C is preferably greater than or equal to 0.03 $\mu$m and less than 1 $\mu$m, more preferably greater than or equal to 0.1 $\mu$m and less than or equal to 0.9 $\mu$m, and further more preferably greater than or equal to 0.2 $\mu$m and less than or equal to 0.5 $\mu$m. In the case where the surface roughness (Ra) of the internal surface of the groove portion C is in the above-described range, the electrolyte can smoothly flow along the groove portion C, and an occurrence of stagnation can be sufficiently prevented.

It is possible to adjust the surface roughness of each of the internal surface (the side surface 22b and the bottom surface Ca of the groove portion C) of the groove portion C and the first surface 22a of the internal wall 22 in the predetermined range by subjecting the internal surface and the first surface 22a to different processes, respectively in a forming process of the collector plate and the grooves. For example, it is possible to grind the first surface 22a by an abrasive with a large particle size, and to grind the internal surface of the groove portion C by an abrasive with a small particle size.

It is preferable that the internal surface (the side surface 22b and the bottom surface Ca of the groove portion C) of the groove portion C is coated with an insulation material. In the case where the side surface 22b of the internal wall 22 and the bottom surface Ca of the groove portion C are coated with an insulation material, the collector plate 20 and the electrolyte do not react with each other even when stagnation occurs.

The collector plate 20 is required to transfer electrons occurring during reactions between the electrolyte and the electrode 30. For this reason, it is necessary to expose the first surface 22a of the internal wall 22, which is in direct contact with the electrode 30. For this reason, when the side surface 22b of the internal wall 22 and the bottom surface Ca of the groove portion C are coated with the insulation material, attentions are to be paid such that the first surface 22a of the internal wall 22 is not coated with the insulation material.

Specifically, firstly, one surface of the collector plate 20 is coated with the insulation material. The coating of the insulation material may be performed by depositing a film or applying the insulation material. It is possible to obtain a predetermined smooth surface by forming a uniform film by deposition or application (coating). Thereafter, the insulation material coated onto the first surface 22a of the internal wall 22 is removed. It is possible to remove the insulation material by grinding. Before a coating film of the insulation material is formed, a protective film may be formed on the first surface 22a of the internal wall 22, and after an insulation film is formed on the protective film, the protective film may be removed together with the insulation film.

A material not reacting with the electrolyte is used as the insulation material. A fluororesin coating agent or a phenolic resin-based acid-resistant paint can be used. A vanadium oxide aqueous solution is widely used in a redox flow battery, and the fluororesin coating agent or the phenolic resin-based acid-resistant paint also has resistance against this solution.

The width of the internal wall 22 is preferably greater than or equal to 0.5 mm and less than or equal to 30 mm, and more preferably greater than or equal to 0.5 mm and less than or equal to 10 mm. The electrolyte is supplied along the groove portion C. For this reason, it is possible to relatively increase the width of the groove portion C by decreasing the width of the internal wall 22. In the case where the width of the groove portion C increases, an occurrence of turbulent flows can be prevented.

The internal walls 22 form a flow path for a flow of the electrolyte. For this reason, it is possible to ensure sufficient strength by designing the internal wall 22 to have a certain level of thickness. As a result, there are advantages such as being easily processed.

"Electrode"

FIG. 5 is a schematic cross-sectional view as the redox flow battery of the first embodiment is cut along the A-A plane in FIG. 2.

A conductive sheet containing carbon fibers can be used as the electrode 30. The carbon fiber referred herein is fibrous carbon, and examples of the fibrous carbon include carbon fibers and carbon nanotubes. In the case where the electrode 30 contains carbon fibers, a contact area between the electrolyte and the electrode 30 increases, and the reactivity of the redox flow battery 100 increases.

Particularly, in the case where the electrode 30 contains carbon nanotubes having a diameter of less than or equal to 1 $\mu$m, a fiber diameter of the carbon nanotubes is small, and thus it is possible to increase the contact area between the electrolyte and the electrode 30. On the other hand, in the case where the electrode 30 contains carbon fibers having a diameter of greater than or equal to 1 $\mu$m, the conductive sheet becomes strong, and it becomes difficult to break the conductive sheet. For example, a carbon felt, a carbon paper, or a carbon-nanotube sheet can be used as the conductive sheet containing carbon fibers.

A layer of the electrode 30 may be provided in the stacking direction, or a plurality of layers of the electrodes 30 may be provided in the stacking direction. For example, as shown in FIG. 5, the electrode 30 may include the first electrode 31, the second electrode 32, and the liquid outlet layer 33 which are sequentially disposed from the side of the collector plate 20.

The first electrode 31 is fitted into the recessed region 20A of the collector plate 20, and is present closer to the collector plate 20 than a first surface 21a of the peripheral edge wall 21 (exposed surface on the side of one surface where the internal walls 22 are formed). In detail, the first electrode 31 is fitted into a region which is surrounded by a side surface of the peripheral edge wall 21 and the first surfaces 22a of the internal walls 22 in the recessed region 20A. The first surface 21a of the peripheral edge wall 21 is also referred to as a surface that is positioned toward the stacking direction, and faces the electrode 30 or the ion-exchange membrane 10. The second electrode 32 is disposed closer to the ion-exchange membrane 10 than the first surface 21a of the peripheral edge wall 21, and stretches throughout a region surrounded by the cell frame 40. The liquid outlet layer 33 stretches throughout the region surrounded by the cell frame 40, and the liquid outlet layer 33 allows the electrolyte to easily flow therethrough more easily than the second electrode 32. The liquid outlet layer 33 may be a porous sheet having a large number of holes for permeation of liquid, and may not necessarily have conductivity.

The first electrode 31 preferably has a liquid permeability greater than that of the second electrode 32. In the case where the liquid permeability of the first electrode 31 in the in-plane direction is greater than that of the second electrode 32 in the stacking direction, a flow of the electrolyte having flown into the electrode compartment K is restricted by the second electrode 32, and the electrolyte diffuses in the in-plane direction. In the case where the electrolyte diffuses throughout the recessed region 20A in the in-plane direction, the electrolyte flows to the entire surface of the second electrode 32 more uniformly and easily.

The liquid outlet layer 33 is porous, and the electrolyte having flown out from the second electrode 32 is guided to the exhaust path by the liquid outlet layer 33. For this reason, the liquid outlet layer 33 preferably has a liquid permeability greater than that of the second electrode 32. In the case where the liquid permeability of the liquid outlet layer 33 in the in-plane direction is greater than that of the second electrode 32 in the stacking direction, a difference in a flow of the electrolyte in a part of the second electrode 32 in the vicinity of the exhaust path 23 becomes small. As a result, charge and discharge reactions can occur on the entire surface of the second electrode 32, and the cell resistance decreases. In the case where the liquid outlet layer 33 is made from a conductive material, and serves as an electrode (third electrode) which is a part of the electrode 30, the cell resistance further decreases. The exemplary examples of materials of the first electrode 31 can be used as the conductive material.

The liquid permeability can be evaluated by a Darcy's law permeability (hereinbelow, may be simply referred to as a permeability). Typically, the Darcy's law is used to represent the permeability of a porous medium, and is also applied to members other than porous materials for the sake of convenience. In a non-uniform and anisotropic member, permeability in a direction where the lowest permeability is observed is adopted.

A Darcy's law permeability k ($m^2$) is calculated based on a relationship with a permeation flux (m/sec) of a liquid which is represented by the following equation where when the liquid having a viscosity μ(Pa·sec) permeates through a member having a cross-sectional area S ($m^2$) and a length L (m) at a flow rate Q ($m^3$/sec), a pressure difference between a liquid inlet side and a liquid outlet side of the member is represented as ΔP (Pa).

$$\frac{Q}{S} = \frac{k}{\mu} \times \frac{\Delta P}{L} \qquad \cdots (1)$$

The permeability of the first electrode 31 is preferably greater than or equal to 100 times, more preferably greater than or equal to 300 times, and further more preferably greater than or equal to 1,000 times that of the second electrode 32. For a specific example where the above-described relationship can be realized, the first electrode 31 is made from a carbon felt or a carbon paper which contains carbon fibers having a fiber diameter of greater than or equal to 1 μm, and the second electrode 32 is made from a carbon-nanotube sheet which contains carbon nanotubes having a fiber diameter of less than or equal to 1 μm. The permeability of the first electrode 31 represents a permeability in the in-plane direction, and the permeability of the second electrode 32 represents a permeability in the stacking direction (normal direction of the in-plane direction).

The liquid outlet layer 33 preferably has a liquid permeability greater than that of the second electrode 32. The reason is that the electrolyte having passed through the second electrode 32 is required to be quickly exhausted to the exhaust path 23. The permeability of the liquid outlet layer 33 is preferably greater than or equal to 50 times, more preferably greater than or equal to 100 times, further more preferably greater than or equal to 300 times, and particularly preferably greater than or equal to 1,000 times that of the second electrode 32. For a specific example where the above-described relationship can be realized, the exemplary examples of materials of the first electrode 31 can be used as the material of the liquid outlet layer 33. The permeability of the liquid outlet layer 33 represents a permeability in the in-plane direction.

"Operation of Redox Flow Battery"

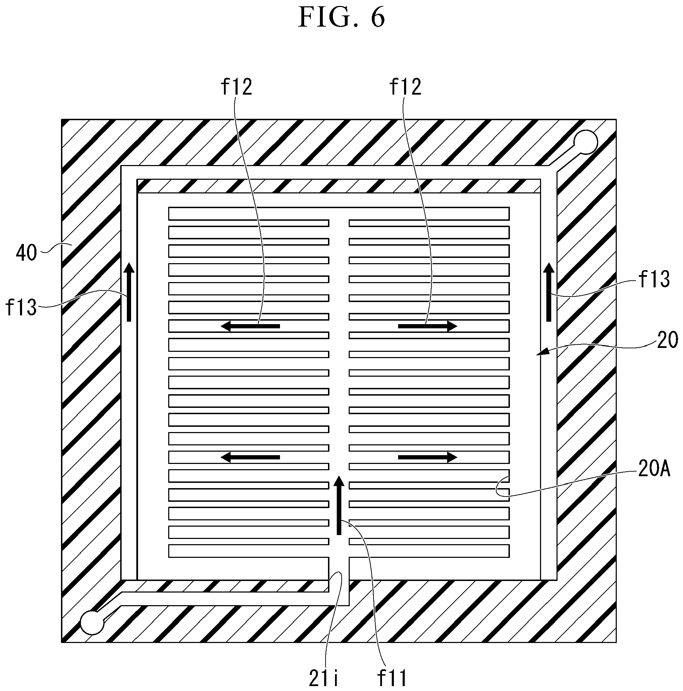

An example of an operation of the redox flow battery 100 will be described with reference to FIG. 6. FIG. 6 is a view showing a flow of the electrolyte in the redox flow battery 100 of the first embodiment.
The electrolyte is supplied into the electrode compartment K of the redox flow battery 100 from an inlet port provided in the cell frame 40. The electrolyte supplied into the electrode compartment K reacts with the electrode 30 in the electrode compartment K. Ions occurring at the reactions flow between the electrodes 30 via the ion-exchange membrane 10, and charge and discharge occurs. The electrolyte after the reactions is exhausted from an outlet port provided in the cell frame 40.
The electrolyte is supplied from the opening portion 21i of the peripheral edge wall 21 into the recessed region 20A in the electrode compartment K (flow f11). The supplied electrolyte flows along the internal walls 22, and diffuses in the recessed region 20A in the in-plane direction (flow f12). Then the electrolyte passes through the electrode 30, and is exhausted from the exhaust path 23 (flow f13).
As described above, in the redox flow battery of the embodiment, a turbulent flow of the electrolyte and stagnation of the electrolyte can be prevented. For this reason, it is possible to prevent an occurrence of non-assumed reactions such as reactions between the collector plate and the electrolyte, and to increase a reaction efficiency of the redox flow battery. Specifically, the cell resistance of the redox flow battery can be decreased, and charge and discharge characteristics can be improved.
As described above, in the redox flow battery of the embodiment, it is possible to prevent a positional shift of the electrode relative to the collector plate. For this reason, it is possible to prevent a positional shift of the electrode relative to the collector plate during the assembly of the redox flow battery, and to prevent the electrolyte from flowing out without passing through the electrode. That is, a decrease in the charge and discharge capacity of the redox flow battery can be prevented.
A preferred embodiment of the present invention has been described above in detail, and the present invention is not limited to a specific embodiment. Various modifications and changes can be made without departing from the features of the present invention described in the claims.

Industrial Applicability

In the collector plate and the redox flow battery of the present invention, a positional shift of the electrode during the assembly of the redox flow battery is prevented. It is considered that the electrolyte can be prevented from stagnating in the electrode compartment, and the cell resistance can be decreased. Therefore, the present invention can be preferably applied to a redox flow battery of a high-capacity storage battery.

Explanation of Reference Signs

    10: ion-exchange membrane
    20: collector plate
    20A: recessed region
    21: peripheral edge wall
    21a: first surface of peripheral edge wall
    21i: opening portion of peripheral edge wall
    22: internal wall
    22a: first surface of internal wall
    22b: side surface of internal wall
    23: exhaust path
    30: electrode
    31: first electrode
    32: second electrode
    33: liquid outlet layer
    40: cell frame
    100: redox flow battery
    CE: single cell
    K: electrode compartment
    C: groove portion
    C1: first groove portion
    C2: second groove portion
    Ca: bottom surface of groove portion

**Claims**

1.  A collector plate comprising:

    a plurality of grooves through which an electrolyte is capable of flowing, and which are provided in at least one surface of the collector plate,
    wherein a surface roughness (Ra) of an internal surface of each groove is smaller than a surface roughness (Ra) of a first surface connecting together the grooves.

2.  The collector plate according to claim 1,
    wherein a surface roughness (Ra) of a 50% or larger area of region of the internal surface of each groove is smaller than the surface roughness (Ra) of the first surface connecting together the grooves.

3.  The collector plate according to claim 1 or 2,
    wherein each of the plurality of grooves has a rectangular cross-sectional shape, and a surface roughness (Ra) of a side surface of each groove is smaller than the surface roughness (Ra) of the first surface.

4.  The collector plate according to any one of claims 1 to 3,
    wherein each of the plurality of grooves has a rectangular cross-sectional shape, and a surface roughness (Ra) of a bottom surface of each groove is smaller than the surface roughness (Ra) of the first surface.

5.  The collector plate according to any one of claims 1 to 4,
    wherein the surface roughness (Ra) of the first surface is greater than or equal to 1 $\mu$m and less than or equal to 300 $\mu$m.

6.  The collector plate according to any one of claims 1 to 5,
    wherein the surface roughness (Ra) of the internal surface of each groove is greater than or equal to 0.03 $\mu$m and

less than 1 $\mu$m.

7. The collector plate according to any one of claims 1 to 6,
   wherein the internal surface of each groove is coated with an insulation material.

8. A redox flow battery comprising:

   an ion-exchange membrane;
   the collector plate according to any one of claims 1 to 7; and
   electrodes disposed between the ion-exchange membrane and the current collector,
   wherein the collector plate is disposed in such a manner that the first surface faces the electrode.

9. The redox flow battery according to claim 8,
   wherein the collector plate includes a peripheral edge wall surrounding a predetermined region, and the peripheral edge wall forms a part of an electrode compartment through which an electrolyte flows.

# FIG. 1

# FIG. 2

# FIG. 3

## FIG. 4

## FIG. 5

# FIG. 6

## INTERNATIONAL SEARCH REPORT

| | International application No. |
|---|---|
| | PCT/JP2017/043745 |

| A. CLASSIFICATION OF SUBJECT MATTER |
|---|
| Int.Cl. H01M8/18(2006.01)i, H01M8/0258(2016.01)i |

According to International Patent Classification (IPC) or to both national classification and IPC

| B. FIELDS SEARCHED |
|---|
| Minimum documentation searched (classification system followed by classification symbols) |
| Int.Cl. H01M8/18, H01M8/0258 |

| Documentation searched other than minimum documentation to the extent that such documents are included in the fields searched |
|---|
| Published examined utility model applications of Japan      1922–1996 |
| Published unexamined utility model applications of Japan      1971–2018 |
| Registered utility model specifications of Japan      1996–2018 |
| Published registered utility model applications of Japan      1994–2018 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 53-102278 A (ORONZIO DENORA IMPIANTI ELETTROCHIMICI | 1–4, 7 |
| Y | S.P.A.) 06 September 1978, claim 1, page 4, lower left column, lines 16–19 & US 4197178 A, claim 1, column 4, lines 13–17 & GB 1547156 A | 5–6, 8–9 |
| Y | JP 2007-149467 A (MATSUSHITA ELECTRIC WORKS, LTD.) 14 June 2007, paragraphs [0010], [0048] (Family: none) | 5–6 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 March 2018 | 13 March 2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2017/043745

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-297338 A (NISSHINBO HOLDINGS INC.) 29 October 1999, paragraph [0033], table 1 (Family: none) | 5-6 |
| Y | JP 2015-122231 A (SUMITOMO ELECTRIC INDUSTRIES, LTD.) 02 July 2015, paragraph [0003], fig. 1 (Family: none) | 8-9 |
| P, X | JP 6108008 B1 (SUMITOMO ELECTRIC INDUSTRIES, LTD.) 05 April 2017, claims 1, 5-7, fig. 2 (Family: none) | 1-6, 8-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016236718 A
- JP 2015122231 A
- JP 2015505147 PCT